# EUROPÄISCHE PATENTSCHRIFT

(11) **EP 3 613 572 B1**
(45) Veröffentlichungstag und Bekanntmachung des Hinweises auf die Patenterteilung: **26.05.2021**
(21) Anmeldenummer: 19187647.3
(22) Anmeldetag: 22.07.2019
(51) Int. Cl.: B29D 30/46, B26D 3/00, B26D 7/01, B26D 7/32, B65H 35/00, B65H 35/06, B29D 30/00, B26D 1/06, B26D 1/00

(54) **SCHNEIDEINRICHTUNG ZUM SCHNEIDEN VON BANDMATERIAL UND VERFAHREN ZUM BETREIBEN EINER SCHNEIDEINRICHTUNG**
CUTTING DEVICE FOR CUTTING STRIP MATERIAL AND METHOD FOR OPERATING A CUTTING DEVICE
DISPOSITIF DE COUPE PERMETTANT DE COUPER UNE MATIÈRE EN BANDE ET PROCÉDÉ DE FONCTIONNEMENT D'UN DISPOSITIF DE COUPE

(30) Priorität: 22.08.2018 DE 102018120501
(43) Veröffentlichungstag der Anmeldung: 26.02.2020
(73) Patentinhaber: Karl Eugen Fischer GmbH, 96224 Burgkunstadt (DE)
(72) Erfinder: Klenner, Ralf, 96272 Hochstadt (DE); Lindner, Stefan, 95326 Kulmbach (DE)
(74) Vertreter: Patentanwälte Olbricht Buchhold Keulertz

(56) Entgegenhaltungen:
- EP-A1- 1 745 920
- EP-A1- 2 808 159
- DE-B3-102007 025 384
- DE-B3-102017 109 459
- DE-U1-202017 102 617

## Beschreibung

Die Erfindung betrifft gemäß dem Oberbegriff von Anspruch 1 eine Schneideinrichtung zum Schneiden von Bandmaterial, insbesondere eines Stahl- oder Textilcordbands, wobei die Schneideinrichtung eine Messeranordnung, die ein bewegbares Obermesser, ein diesem zugeordnetes unbewegliches Untermesser und eine Antriebseinrichtung zum Bewegen des Obermesser aufweist, wobei sich während zumindest eines Teils der Bewegung des Obermessers ein Schnittpunkt entlang einer Schnittkante des Untermessers von einem vorderen Schnittbereich zu einem hinteren Schnittbereich der Messeranordnung bewegt; wobei ein Band zur Aufnahme und zum Abtransport eines geschnittenen Bandmaterialabschnitts der Messeranordnung nachgeschaltet ist, wobei das Band ein Obertrum aufweist, das eine unter einem ersten Winkel zur Horizontalen verlaufende Stellung umfasst, wobei eine Verstelleinrichtung im Bereich der Messeranordnung angeordnet ist und ein unterhalb des Bands angeordnetes Stützbauteil aufweist, wobei das Stützbauteil das Band hält.

Eine solche Schneideinrichtung ist beispielsweise aus DE 10 2007 025 384 B3 bekannt. Ein von einer Bandmaterialrolle abgewickeltes Bandmaterial wird mit einer Materialzange einer Greifeinrichtung an der vorlaufenden Bandmaterialkante gegriffen, wonach die Materialzange zurückgezogen wird und dabei das gegriffene Band mitnimmt. Dieses wird dabei durch eine Messeranordnung gezogen, die Abschnitte vom Bandmaterial abschneidet. Die Messeranordnung weist ein stehendes Untermesser und ein relativ zu diesem vertikal bewegbares Obermesser auf, das üblicherweise unter einem Winkel zum horizontal verlaufenden Untermesser steht, so dass sich beim Schneiden ein wandernder Schnittpunkt mit einer Scherwirkung ergibt. Unmittelbar hinter der Messeranordnung, gesehen in Durchzugsrichtung des Bandes, ist ein Transportband angeordnet, das den abgeschnittenen Bandmaterialabschnitt aufnimmt. Das Transportband ist etwas niedriger angeordnet als die Schneidebene, in der das Bandmaterial beim Schneiden liegt. Dadurch kann das Obermesser in Überdeckung mit der Schneidkante bzw. dem Untermesser gelangen, ohne dabei in Kontakt mit dem Transportband zu gelangen. Um die Fallhöhe des abgeschnittenen Bandmaterialabschnitts zu reduzieren, ist eine Verstelleinrichtung vorgesehen, mit der die räumliche Lage eines Abschnitts des Obertrums des Transportbands im Bereich der Messeranordnung verstellt werden kann. Das Transportband verläuft mit seinem Obertrum unter einem Winkel zur Horizontalen, also etwas schräg relativ zur horizontalen Ausrichtung der Schneidkante. Mit der aus DE 10 2007 025 384 B3 bekannten Verstelleinrichtung ist es nun möglich, diesen Obertrumabschnitt aus seiner schräg verlaufenden räumlichen Position anzuheben, bis er im Wesentlichen horizontal verläuft, sich also mithin der Abstand zwischen der Aufnahmeebene des Obertrums und der Schneidebene hierüber verringern lässt. Bei fortschreitender Schneidbewegung wird der Obertrumabschnitt dann wieder abgesenkt, um einen Kontakt mit dem Obermesser zu vermeiden. Hierzu weist die Verstelleinrichtung ein um eine Achse schwenkbares Unterstützungsbauteil, beispielsweise ein Unterstützungsblech oder einen Unterstützungsrahmen, auf.

Um das Unterstützungsbauteil schneller und exakter als in der DE 10 2007 025 384 B3 zu positionieren, ist aus der DE 20 2017 102 617 U1 weiter bekannt, zum Antrieb der Verstelleinrichtung und der Antriebseinrichtung des Obermessers jeweils einen Antriebsmotor zu nutzen. Die Antriebsmotoren werden dann so betrieben, dass sich das Obermesser und das Unterstützungsbauteil nahezu gleichförmig abwärts bewegen.

Bei den vorgenannten Schneideinrichtungen besteht während des Schnittvorgangs ein relativ großer Abstand zwischen dem Untermesser und dem Abtransportband. Dadurch ist die erzielbare Genauigkeit beim Ablegen der Abschnitte des Materialbandes auf das Abtransportband begrenzt, die für nachfolgende Bearbeitungsschritte aber möglichst hoch sein sollte.

Aufgabe der Erfindung ist es daher, eine verbesserte Schneideinrichtung und ein Verfahren zum Betreiben der verbesserten Schneideinrichtung bereitzustellen, die eine genauere Ablage der Materialabschnitte auf das Abtransportband ermöglicht.

Hauptmerkmale der Erfindung sind im kennzeichnenden Teil des Anspruchs 1 sowie im Anspruch 11 angegeben. Ausgestaltungen sind Gegenstand der Ansprüche 2 bis 10 und 12 bis 13.

Zur Lösung der Aufgabe ist bei einer Schneideinrichtung zum Schneiden von Bandmaterial, insbesondere eines Stahl- oder Textilcordbands, wobei die Schneideinrichtung eine Messeranordnung, die ein bewegbares Obermesser, ein diesem zugeordnetes unbewegliches Untermesser und eine Antriebseinrichtung zum Bewegen des Obermesser aufweist, wobei sich während zumindest eines Teils der Bewegung des Obermessers ein Schnittpunkt entlang einer Schnittkante des Untermessers von einem vorderen Schnittbereich zu einem hinteren Schnittbereich der Messeranordnung bewegt; wobei ein Band zur Aufnahme und zum Abtransport eines geschnittenen Bandmaterialabschnitts der Messeranordnung nachgeschaltet ist, wobei das Band ein Obertrum aufweist, das eine unter einem ersten Winkel zur Horizontalen verlaufende Stellung umfasst, wobei eine Verstelleinrichtung im Bereich der Messeranordnung angeordnet ist und ein unterhalb des Bands angeordnetes Stützbauteil aufweist, wobei das Stützbauteil das Band hält, erfindungsgemäß vorgesehen, dass das Stützbauteil einen ersten Bauteilabschnitt, der dem hinteren Schnittbereich zugeordnet ist, und einen zweiten Bauteilabschnitt, der dem vorderen Schnittbereich zugeordnet ist, aufweist, wobei der erste Bauteilabschnitt um eine erste Achse schwenkbar zwischen der unter dem ersten Winkel zur Horizontalen verlaufenden Stellung und einer im Wesentlichen horizontalen Stellung verstellbar ist, wobei der zweite Bauteilabschnitt relativ zum ersten Bauteilabschnitt um eine zweite Achse schwenkbar zwischen der im Wesentlichen horizontalen Stellung und einer unter einem zweiten Winkel zur Horizontalen verlaufenden Stellung verstellbar ist, wobei die zweite Achse zwischen dem ersten Bauteilabschnitt und dem zweiten Bauteilabschnitt angeordnet ist.

Damit wird durch die Erfindung eine Verstelleinrichtung bereitgestellt, die ein zweiteiliges Stützbauteil aufweist, wobei die einzelnen Bauteilabschnitte des Stützbauteils gegeneinander schwenkbar sind. Dadurch können der erste Bauteilabschnitt und der zweite Bauteilabschnitt aus der horizontalen Stellung unabhängig voneinander um die erste bzw. zweite Achse zur Horizontalen verschwenkt werden. Dies bewirkt, dass das Stützbauteil mit seinem ersten und zweiten Bauteilabschnitt bevor und während der Bewegung des Schnittpunktes entlang der Schnittkante des Untermessers abhängig von der Position des Schnittpunktes bzw. des sich zum Stützbauteil bewegenden Obermessers von dem Obermesser wegbewegt werden kann.

Auf diese Weise kann die Verstelleinrichtung derart betreibbar sein, dass der zweite Bauteilabschnitt um die zweite Achse von der horizontalen Stellung zum zweiten Winkel zur Horizontalen verschwenkt wird, bevor und während der Schnittpunkt den vorderen und hinteren Schnittbereich durchquert. Damit wird ein Absenken und Kippen des dem zweiten Bauteilabschnitt entsprechenden Abschnitts des Obertrums bewirkt, während der erste Bauteilabschnitt noch in der horizontalen Stellung verbleibt, um den entsprechenden Abschnitt des Obertrums am hinteren Schnittbereich nahe der Schnittkante des Untermessers zu halten. Dies bewirkt, dass erst der zweite Bauteilabschnitt mit dem Obertrum dem Obermesser im vorderen Schnittbereich ausweicht, wobei der erste Bauteilabschnitt, in der horizontalen Stellung verbleibt und dann erst mit fortschreitender Schnittbewegung der erste Bauteilabschnitt ebenfalls nach unten ausweicht. Dies verringert die Fallhöhe des geschnittenen Bandmaterialabschnitts zwischen der Schnittkante des Untermessers und dem Obertrum. Dadurch erhöht sich im Schnittbereich die Genauigkeit der Ablage von geschnittenen Bandmaterialabschnitten auf das Band, da sich die Fallhöhe im gesamten Schnittbereich reduziert.

Dafür kann die Verstelleinrichtung insbesondere derart betreibbar sein, dass der erste Bauteilabschnitt um die erste Achse von der horizontalen Stellung zu einem ersten Winkel zur Horizontalen verschwenkt wird, bevor und während der Schnittpunkt den hinteren Schnittbereich durchquert.

Auf diese Weise weicht der erste Bauteilabschnitt dem sich absenkenden Obermesser erst dann aus, wenn der Schnittpunkt kurz vor dem hinteren Schnittbereich bzw. oberhalb der zweiten Achse ist und danach in den hinteren Schnittbereich gelangt. Dies verlängert das Verbleiben des ersten Bauteilabschnitts in der horizontalen Stellung und damit dem Verbleiben des Obertrums am ersten Bauteilabschnitt in der horizontalen Stellung, sodass die Fallhöhe minimiert und so die Genauigkeit der Ablage des geschnittenen Bandmaterialabschnitts auf das Band weiter erhöht wird.

Die erste und die zweite Achse sind vorzugsweise parallel zueinander ausgebildet. Dies bewirkt eine einfache Führung des Obertrums. Insbesondere in Verbindung mit einem gleichmäßigen Absenken des Obertrums kann so die Ablage der von der Schnittkante des Untermessers fallenden geschnittenen Bandmaterialabschnitte mit einer hohen Genauigkeit durchgeführt werden.

Die zweite Achse kann durch eine Gelenkverbindung zwischen dem ersten Bauteilabschnitt und dem zweiten Bauteilabschnitt gebildet sein. Die Gelenkverbindung bewirkt eine einfach herzustellende, schwenkbare Verbindung zwischen dem ersten Bauteilabschnitt und dem zweiten Bauteilabschnitt, wobei die zweite Achse zwischen dem ersten Bauteilabschnitt und dem zweiten Bauteilabschnitt angeordnet ist. Die Gelenkverbindung kann dabei so ausgestaltet werden, dass sie lediglich zwischen einer gestreckten Position, in der der erste Bauteilabschnitt und der zweite Bauteilabschnitt eine Ebene bilden, und einer angewinkelten Position, in der der zweite Bauteilabschnitt in einem größeren Winkel zur Horizontalen als der erste Bauteilabschnitt verschwenkt ist, geschwenkt werden kann.

Die Verstelleinrichtung kann eine Stelleinrichtung zum Verstellen der Position der zweiten Achse aufweisen. Auf diese Weise kann insbesondere die Position der zweiten Achse in einer vertikalen Richtung bzw. der Gelenkverbindung gezielt beeinflusst werden, um ein Schwenken des ersten Bauteilabschnitts um die erste Achse zu bewirken. Dabei kann die Stelleinrichtung so ausgebildet sein, dass beim Ausfahren der Stelleinrichtung die zweite Achse angehoben wird und beim Einfahren der Stelleinrichtung die zweite Achse gesenkt wird.

Die Stelleinrichtung kann zum Beispiel einen pneumatischen Stellantrieb oder einen elektrischen Stellantrieb aufweisen. Alternativ kann beispielsweise auch ein hydraulischer Stellantrieb vorgesehen werden.

Die Stelleinrichtung ist vorzugsweise derart betreibbar, dass sie die zweite Achse positionsfest hält, während der Schnittpunkt zumindest einen Teil des vorderen Schnittbereichs durchquert, und die zweite Achse senkt, bevor und während der Schnittpunkt den hinteren Schnittbereich durchquert. Die Bewegung des ersten Bauteilabschnitts beginnt dann vorzugsweise schon, bevor der Schnittpunkt den vorderen Schnittbereich verlässt. Auf diese Weise kann der erste Bauteilabschnitt relativ lange nahezu horizontal verbleiben und der zweite Bauteilabschnitt durch Schwenken um die zweite Achse im Bereich des Schnittpunkts relativ nahe an der Schnittkante geführt werden. Erst kurz vor Verlassen des ersten Schnittbereichs, also kurz bevor der Schnittpunkt oberhalb der zweiten Achse angekommen ist, beginnt eine Absenkbewegung des ersten Bauteilabschnitts um die erste Achse.

In einer bevorzugten Weiterbildung ist die Stelleinrichtung mit einem Gelenkhebel verbunden und schwenkbar am Rahmengestell gelagert, wobei der Gelenkhebel schwenkbar mittels eines Hebelelements mit der zweiten Achse verbunden ist. Auf diese Weise wird eine flexible Lagerung der Stelleinrichtung bereitgestellt, die bewirkt, dass die Stelleinrichtung in jeder Winkelposition des zweiten Bauteilabschnitts eine Kraft in vertikaler Richtung auf die zweite Achse ausüben kann. Damit kann die zweite Achse mittels der Stelleinrichtung in der angehobenen Position verbleiben, während sich der zweite Bauteilabschnitt senkt. Der erste Bauteilabschnitt, der zwischen der ersten Achse und der zweiten Achse angeordnet ist, verbleibt dann zunächst in der nahezu horizontalen Stellung.

Der vordere und der hintere Schnittbereich sind vorzugsweise annähernd gleich lang ausgebildet. Die Unterteilung in vorderen und hinteren Schnittbereich wird durch die Lage der zweiten Achse in Bezug zur Schnittkante bestimmt. Die zweite Achse ist dabei unterhalb des Übergangs vom ersten zum zweiten Schnittbereich angeordnet. Eine Anpassung der jeweiligen Längen des Schnittbereichs kann also durch ein entsprechendes Anordnen der zweiten Achse in einem Mittenbereich der Messeranordnung bewirkt werden. Dadurch unterliegt die Fallhöhe in den Schnittbereichen nur geringen Schwankungen und ist im Wesentlichen konstant.

Die Verstelleinrichtung weist bevorzugterweise eine Schwenkeinrichtung zum Schwenken des zweiten Bauteilabschnitts um die zweite Achse auf. Dazu kann die Schwenkeinrichtung zum Beispiel einen Antriebsmotor aufweisen, der mittels eines Kurbeltriebes mit dem zweiten Bauteilabschnitt verbunden ist. Damit kann dann der zweite Bauteilabschnitt um die zweite Achse relativ zur Horizontalen verschwenkt werden.

Das Stützbauteil kann einen dritten Bauteilabschnitt aufweisen, der außerhalb des Bereichs der Messeranordnung unterhalb des Bands angeordnet ist, wobei der zweite Bauteilabschnitt relativ zum dritten Bauteilabschnitt um eine dritte Achse schwenkbar gelagert ist, wobei die dritte Achse zwischen dem zweiten und dem dritten Bauteilabschnitt angeordnet ist, wobei der dritte Bauteilabschnitt um eine vierte Achse zwischen der unter einem ersten Winkel zur Horizontalen verlaufenden Stellung und einem dritten Winkel zur Horizontalen verlaufenden Stellung schwenkbar gelagert ist. Mit dem dritten Bauteilabschnitt wird vermieden, dass die Abschnitte des Obertrums des Bandes, die nicht von dem Stützbauteil gehalten werden, durchhängen. Dies bewirkt, dass der Abtransport des geschnittenen Bandmaterialabschnitts ohne eine Verschiebung der Position des Bandmaterialabschnitts durch ein durchhängendes Obertrum erfolgt.

Weiter ist zur Lösung der Aufgabe ein Verfahren zum Betreiben einer Schneideinrichtung nach der vorangegangenen Beschreibung vorgesehen, wobei das Verfahren die folgenden Schritte umfasst: Verschwenken des ersten Bauteilabschnitts um die erste Achse in die im Wesentlichen horizontale Stellung und Verschwenken des zweiten Bauteilabschnitts um die zweite Achse in die im Wesentlichen horizontale Stellung, Schneiden von Bandmaterial mittels der Schneideinrichtung durch Bewegen des Obermessers zum Untermesser, wobei sich während zumindest eines Teils der Bewegung des Obermessers ein Schnittpunkt entlang einer Schnittkante des Untermessers von einem vorderen Schnittbereich zu einem hinteren Schnittbereich der Messeranordnung bewegt, und Aufnehmen eines geschnittenen Bandmaterialabschnitts mittels des Bandes.

Das Verfahren umfasst insbesondere den folgenden Schritt: Verschwenken des zweiten Bauteilabschnitts um die zweite Achse von der horizontalen Stellung zum zweiten Winkel zur Horizontalen, bevor und während der Schnittpunkt den vorderen und hinteren Schnittbereich durchquert.

Weiter kann das Verfahren den folgenden Schritt aufweisen: Verschwenken des ersten Bauteilabschnitts um die erste Achse von der horizontalen Stellung zum ersten Winkel zur Horizontalen, bevor und während der Schnittpunkt den hinteren Schnittbereich durchquert.

Die Wirkungen und Vorteile des Verfahrens ergeben sich aus der oben angeführten Beschreibung der Schneideinrichtung.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Darstellung einer Vorderansicht des Bandes in unter dem ersten Winkel verlaufender Stellung;
- Fig. 2: eine schematische Draufsicht zu Fig. 1;
- Fig. 3: eine weitere schematische Darstellung der Streckenverhältnisse des Bandes in Bezug zum Untermesser während eines Schneidvorgangs;
- Fig. 4: eine schematische Darstellung des Bandes in im Wesentlichen horizontaler Stellung vor einem Schneidvorgang;
- Fig. 5: eine schematische Darstellung des Bandes am Beginn des Schneidvorgangs;
- Fig. 6: eine schematische Darstellung des Bandes während sich der Schnittpunkt durch den vorderen Schnittbereich bewegt;
- Fig.7: den weiteren Verlauf zu Fig. 6;
- Fig. 8: den weiteren Verlauf zu Fig. 7 während sich der Schnittpunkt durch den hinteren Schnittbereich bewegt;
- Fig. 9: den weiteren Verlauf zu Fig. 8 am Ende des Schneidvorgangs;
- Fig. 10: eine schematische Darstellung des Bandes in im Wesentlichen horizontaler Stellung;
- Fig. 11: eine schematische Darstellung des Bandes in abgesenkter Stellung;
- Fig. 12: einen vergrößerten Ausschnitt einer Vorderansicht des Stellantriebs des ersten Bandabschnitts aus Fig. 10;
- Fig. 13: eine schematische Darstellung einer Schneidanlage ohne Slitter;
- Fig. 14: eine schematische Darstellung einer Schneidanlage mit Slitter; und
- Fig. 15: eine schematische Darstellung der Verfahrensschritte des Verfahrens.

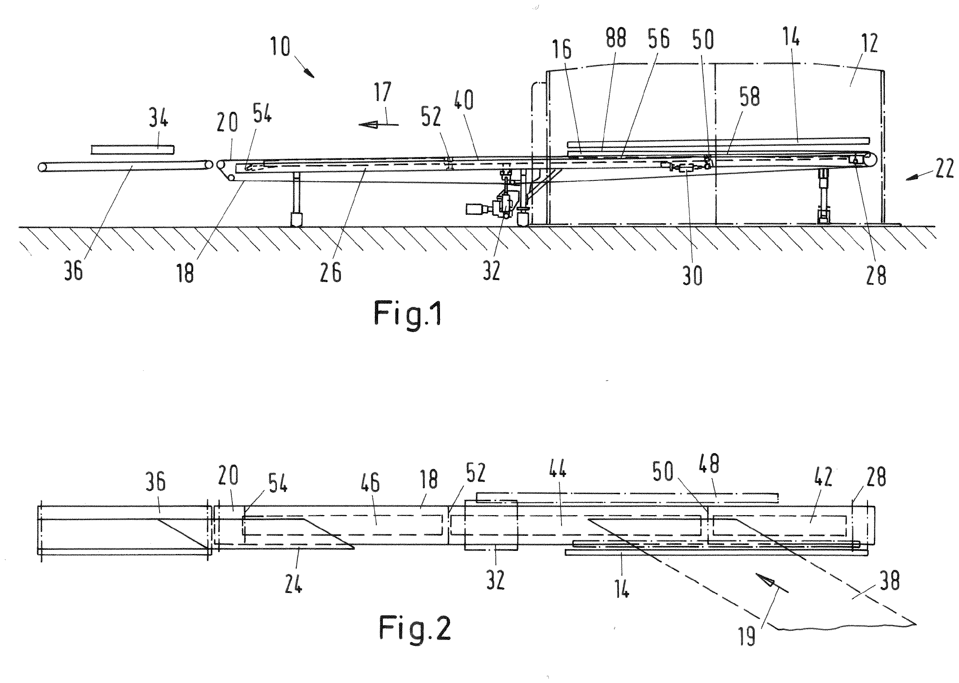

Wie in Fig. 1 dargestellt, wird die Schneideinrichtung im Folgenden in ihrer Gesamtheit mit dem Bezugszeichen 10 dargestellt.

Die Schneideinrichtung 10 ist in Fig. 1 im Zusammenhang mit einer nachgeschalteten Spleißeinrichtung 34 gezeigt, um die Erläuterung der Schneideinrichtung 10 zu erleichtern.

Die Schneideinrichtung 10 umfasst eine Messeranordnung 12, die ein bewegbares Obermesser 14 und ein positionsfestes Untermesser 16 aufweist. Das Obermesser 14 ist scherenartig in einem Winkel zum Untermesser 16 angeordnet und kann zum Untermesser 16 vertikal bewegt werden, um einen Schneidvorgang durchzuführen.

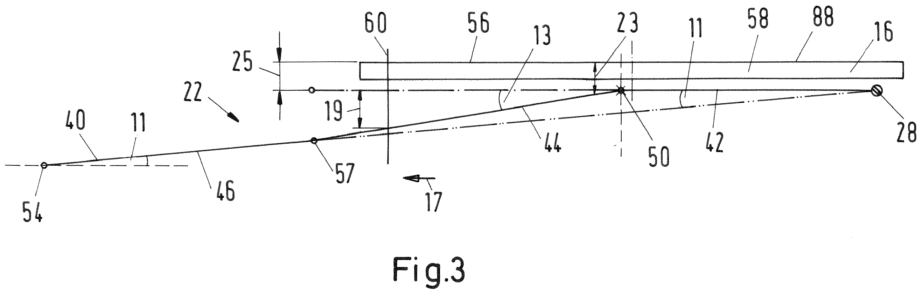

Weiter weist die Schneideinrichtung 10 ein Band 18 zur Aufnahme und zum Abtransport eines geschnittenen Bandmaterialabschnitts 24 auf, wobei das Band 18 ein Obertrum 20 aufweist und der Messeranordnung 12 nachgeschaltet ist. Dementsprechend fällt ein Bandmaterialabschnitt 24, der von der Messeranordnung 12 geschnitten wird, auf das Obertrum 20 des Bands 18. Das Band 18 transportiert dann den geschnittenen Bandmaterialabschnitt 24 in die mit dem Pfeil 17 gekennzeichnete Richtung zum Transportband 36 der Spleißeinrichtung 34. Dabei weist das Band 18 eine geringfügige Neigung zur Horizontalen unter einem ersten Winkel 11 auf (Fig. 3). Durch diese Neigung verläuft das Band 18 nahezu parallel zum geneigt angeordneten Obermesser 14.

Unterhalb des Obertrums 20 im Bereich der Messeranordnung 12 weist die Schneideinrichtung 10 eine Verstelleinrichtung 22 auf. Die Verstelleinrichtung 22 umfasst ein Stützbauteil 40 zum Stützen des Obertrums 20. Zumindest ein Teil des Stützbauteils 40 ist um eine erste Achse 28, die an einem messerseitigen Ende des Bands 18 angeordnet ist, schwenkbar und kann daher ein Heben und Senken des Obertrums 20 im Bereich unterhalb der Messeranordnung 12 bewirken. Während des Hebens und des Senkens wird der Winkel des Obertrums 20 zumindest im Bereich der Messeranordnung 12 gegenüber einer Horizontalen verändert.

Zum Verstellen des Stützbauteils 40 sind eine Schwenkeinrichtung 32 und eine Stelleinrichtung 30 vorgesehen.

Ein Rahmengestell 26 bildet ein Gerüst, an dem Komponenten der Verstelleinrichtung 22, der Schneideinrichtung 10 und/oder des Bands 18 sowie die Schwenkeinrichtung 32 befestigt sind. So ist in dem dargestellten Beispiel die erste Achse 28 mit dem Rahmengestell 26 verbunden.

Fig. 2 zeigt eine Draufsicht der oben beschriebenen Schneideinrichtung aus Fig. 1. Dabei ist eine Greifeinrichtung 48 erkennbar, die zum Greifen von Bandmaterial 38 ausgebildet ist, um das Bandmaterial 38 durch die Messeranordnung 12, insbesondere einem zwischen dem Obermesser 14 und dem Untermesser 16 ausgebildeten Messerspalt zu ziehen. Die Strecke, die das Bandmaterial 38 mittels der Greifeinrichtung 48 gezogen wird, bestimmt, an welcher Stelle der Bandmaterialabschnitt 24 mittels der Messeranordnung 12 von dem Bandmaterial 38 geschnitten wird.

Das Untermesser 16 und die Verstelleinrichtung 22 der Schneideinrichtung 10 sind in Fig. 3 näher dargestellt.

Fig. 3 zeigt dabei schematisch das Untermesser 16, dass an seiner Oberseite eine horizontal verlaufende Schnittkante 88 aufweist. Durch die Position einer zweiten Achse 50, die einen von der ersten Achse 28 kommenden ersten Bauteilabschnitt 42 mit einem zweiten Bauteilabschnitt 44 des Stützbauteils 40 schwenkbar miteinander verbindet, wird die Schnittkante 88 in einen vorderen Schnittbereich 56 und einen hinteren Schnittbereich 58 geteilt, die in der Regel mehr oder weniger gleich lang sind. Optional weist das Stützbauteil einen dritten Bauteilabschnitt 46 auf, der sich über eine dritte, schwimmend gelagerte Achse 52 an den zweiten Bauteilabschnitt 44 anschließt. Die schwimmende Lagerung der dritten Achse 52 ermöglicht einen Ausgleich der durch Verschwenken des zweiten Bauteilabschnitts 44 und des ersten Bauteilabschnitts 42 auftretenden Längenunterschiede. An seinem von der dritten Achse 52 abgewandten Ende ist der dritte Bauteilabschnitts 46 über eine vierte Achse 54 am Rahmengestell 26 befestigt.

Zum Schneiden wird der Messerspalt zwischen Obermesser 14 und Untermesser 16 durch eine vertikale Bewegung des Obermessers 14 gegenüber dem stationären Untermesser 16 geschlossen. Da das Obermesser 14 gegenüber der horizontal verlaufenden Schnittkante 88 des Untermessers 16 geneigt angeordnet ist, wandert dabei ein Schnittpunkt entlang der Schnittkante 88 erst durch den vorderen Schnittbereich 56 und dann durch den hinteren Schnittbereich 58. In einer Position 60 wird dabei ein Bandmaterial zuerst eingeschnitten.

Der erste Bauteilabschnitt 42 ist dem hinteren Schnittbereich 58 und der zweite Bauteilabschnitt 44 dem vorderen Schnittbereich 56 zugeordnet. Sie beide bilden zusammen einen Ablagebereich, in dem die Bandmaterialabschnitte 24 nach und während des Schneidens abgelegt werden.

Der dritte Bauteilabschnitt 46 des Stützbauteils 40 ist in Fig. 3 unter dem ersten Winkel 11 zur Horizontalen angeordnet. Die Horizontale wird dabei durch die gestrichelte Linie dargestellt. Eine Fallhöhe von der Schnittkante 88 ergibt sich dabei durch einen Abstand 19 zum Obertrum zuzüglich einem Abstand 25. Der Abstand 19 entspricht dabei einem durch die Neigung des zweiten Bauteilabschnitts 44 hervorgerufene Abweichung zur Horizontalen, die in einer Ebene mit der zweiten Achse 50 verläuft. Der Abstand 25 entspricht der Distanz zwischen dieser Horizontalen und der Schnittkante 88. In der Nähe der zweite Achse 50 ist die Fallhöhe von der Schnittkante 88 aus durch den Abstand 23 symbolisiert.

In dem in Fig. 3 dargestellten Zustand befindet sich der erste Bauteilabschnitt 42 in einer nahezu horizontalen Position, in der er mehr oder weniger parallel zur Schnittkante 88 verläuft. Strich-2-punktiert dargestellt ist dabei der Verlauf des Obertrums, falls zwischen dem ersten Bauteilabschnitt 42 und dem zweiten Bauteilabschnitt 44 kein zweites Gelenk 50 vorgesehen wäre. Daraus ist ersichtlich, wie die Fallhöhe von der Schnittkante 88 durch das zweite Gelenk 50, dass ein Verschwenken zwischen dem ersten Bauteilabschnitt 42 und dem zweiten Bauteilabschnitt 44 ermöglicht, verringert wird.

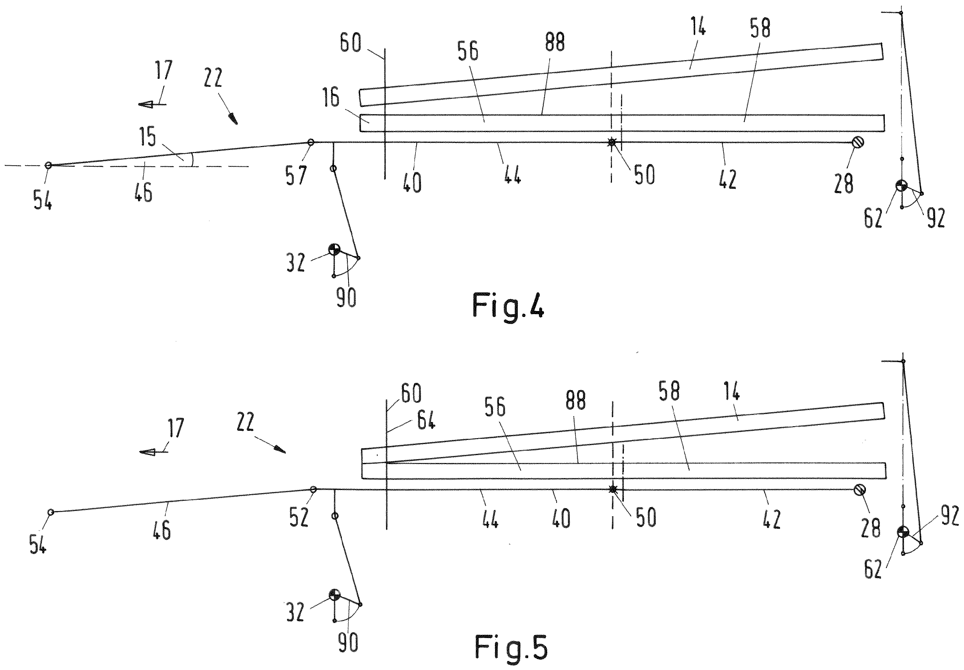

Die Figuren 4 bis 9 stellen schematisch einzelne Phasen des Schneidvorgangs dar. Dabei ist vor dem Schneidvorgang mittels der Greifeinrichtung 48 das Bandmaterial 38 in der gewünschten Länge durch die Messeranordnung 12 gezogen worden.

In Fig. 4 ist das Obermesser 14 vor dem Schneidvorgang über dem Untermesser 16 mit offenen Messerspalt angeordnet. Das Obermesser 14 ist zur Horizontalen geneigt ausgerichtet. Der erste Bauteilabschnitt 42 und der zweite Bauteilabschnitt 44 sind in der nahezu horizontalen Stellung angeordnet, sodass die Fallhöhe über die gesamte Länge der Schnittkante 88 möglichst gering ist. Dabei nimmt der dritte Bauteilabschnitt 46 durch das Anheben des zweiten Bauteilabschnitts 44 und damit der dritten Achse 52 eine Stellung ein, in der der dritte Bauteilabschnitt 46 um einen Winkel 15 zur Horizontalen um die vierte Achse 54 verschwenkt ist.

Das Obermesser 14 wird mittels einer schematisch dargestellten Antriebseinrichtung 62 relativ zum Untermesser 16 bewegt. Die Antriebseinrichtung 62 weist einen Kurbeltrieb 92 auf, der mit dem Obermesser 14 verbunden ist. Die Kurbelstellung des Kurbeltriebs 92 bestimmt dabei die Position des Obermessers 14 relativ zum Untermesser 16.

Während des Absenkens des Obermessers 14 in Richtung des Untermessers 16 entsteht an einer Schnittkante 88 des Untermessers 16 ein Schnittpunkt 64, der sich entlang der Schnittkante 88 des Untermessers 16 durch den vorderen Schnittbereich 56, dann durch den hinteren Schnittbereich 58 bewegt, wenn das Obermesser 14 weiter relativ zum Untermesser 16 bewegt wird. Der Startpunkt, an dem das Bandmaterial 38 eingeschnitten wird, ist mit dem Referenzzeichen 60 bezeichnet.

In Fig. 5 ist das Obermesser 14 so weit abgesenkt, dass der eigentliche Schnitt im Bandmaterial 38 beginnt, dass eine geringere Breite aufweist als das Obermesser 14 und das Untermesser 16.

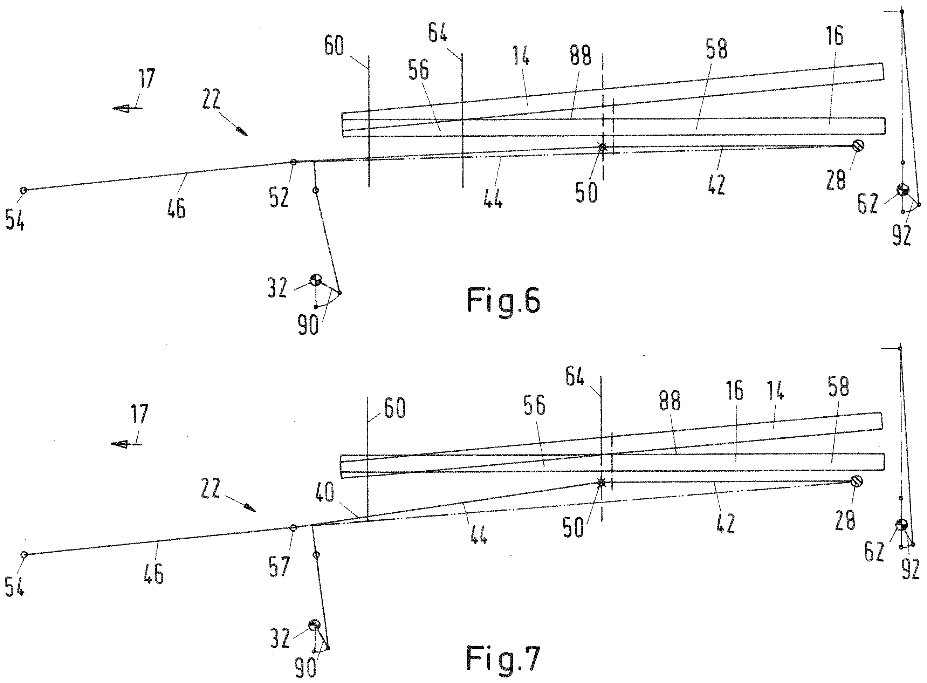

Mit Beginn des Einschneidens bei 60 bzw. kurz davor und wenn sich der Schnittpunkt 64 vom Startpunkt 60 weg und in den vorderen Schnittbereich hinein bewegt, wird der zweite Bauteilabschnitt 44 um die zweite Achse 50 mittels der Schwenkeinrichtung 32 nach unten geschwenkt (Fig. 6), während der erste Bauteilabschnitt 42 noch immer horizontal ausgerichtet ist. Dafür weist die Schwenkeinrichtung 32 einen Kurbeltrieb 90 auf, der mit dem zweiten Bauteilabschnitt 44 in der Nähe der dritten Achse 52 verbunden ist und je nach Stellung des Kurbeltriebs 90 die Höhe der dritten Achse 52 verändert. Damit wird die Neigung des zweiten Bauteilabschnitts 44 gegenüber der Horizontalen und somit ein Abstand zur Schnittkante 88 beeinflusst, wobei die zweite Achse 50 zunächst in unveränderter Position gehalten wird.

Bei der Darstellung nach Fig. 7 befindet sich der der Schnittpunkt auf einer Höhe mit der zweiten Achse 50, also im Übergang vom vorderen Schnittbereich 56 in den hinteren Schnittbereich 58. Um eine Kollision des Obermessers 14 mit dem Obertrum zu vermeiden, wurde kurz zuvor ein Verschwenken des ersten Bauteilabschnitt 42 um die erste Achse 28 eingeleitet. Das Verschwenken des ersten Bauteilabschnitts 42 um die erste Achse 28 erfolgt dabei mittels der Stelleinrichtung 30, die zwischen dem ersten Bauteilabschnitt 42 und dem zweiten Bauteilabschnitt 44 wirkt.

Die in den Fig. 6 und 7 dargestellte Doppelpunkt-Strichlinie zeigt dabei die fiktive Stellung eines gemäß dem Stand der Technik ausgebildeten Stützbauteils an, die das entsprechende Stützbauteil an der jeweiligen Position des Schnittpunkt 64 hätte. Dabei ist deutlich zu sehen, dass der zweite Bauteilabschnitt 44 und der erste Bauteilabschnitt 42 oberhalb der Doppelpunkt-Strichlinie angeordnet sind. Daraus wird deutlich, dass die Fallhöhe des geschnittenen Bandmaterialabschnitts 24 entlang der Schnittkante 88 mit der vorliegenden Erfindung geringer ist als im Stand der Technik.

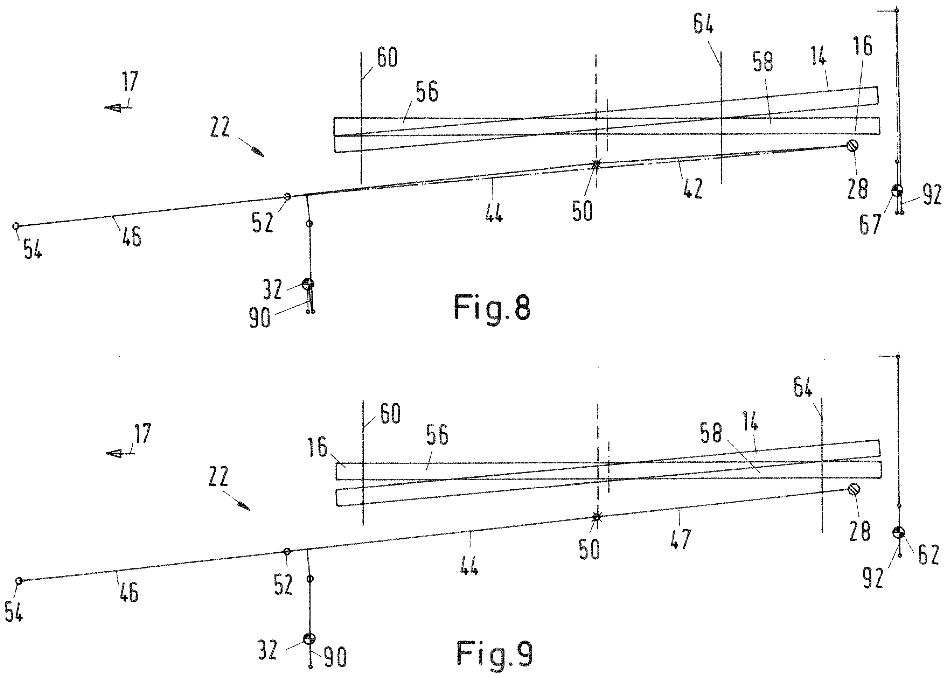

Mit weiterem Voranschreiten des Obermessers 14 in Richtung des Untermessers 16 und damit des Schnittpunkts durch den hinteren Schnittbereich 58, muss nun auch der erste Bauteilabschnitt 42 weiter verschwenkt werden, um eine Kollision mit dem Obermesser 14 zu vermeiden. In Fig. 8 ist das Verschwenken des ersten Bauteilabschnitts 42 dargestellt, während der Schnittpunkt 64 sich etwa in der Mitte des hinteren Schnittbereichs 58 befindet. Der erste Bauteilabschnitt 42 und der zweite Bauteilabschnitt 44 sind nun wieder näher an der Doppelpunkt-Strichlinie angeordnet. Dennoch sind beide immer noch über dieser Doppelpunkt-Strichlinie angeordnet, sodass auch in dieser Anordnung die Fallhöhe von geschnittenen Bandmaterialabschnitten 24 geringer ist als im Stand der Technik.

Fig. 9 zeigt das Ende des Schneidvorganges, wobei der Schnittpunkt 64 den hinteren Schnittbereich 58 durchwandert hat und der erste Bauteilabschnitt 42 und der zweite Bauteilabschnitt 44 eine Ebene bilden, die unter dem ersten Winkel zur Horizontalen angeordnet sind. Der Bandmaterialabschnitt 24 ist in diesem Stadium des Schneidvorgangs von dem Bandmaterial 38 getrennt und der Schneidvorgang abgeschlossen.

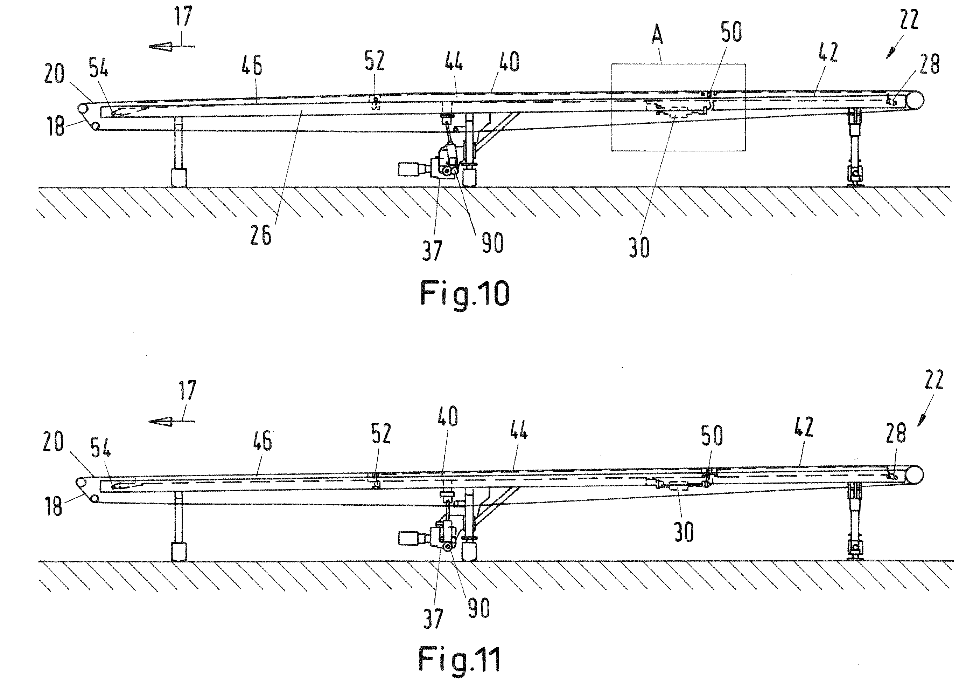

In Fig. 10 ist die Verstelleinrichtung 22 an dem Band 18 detaillierter dargestellt. Das Stützbauteil 40 ist hier in der angehobenen Stellung dargestellt, d.h., dass der erste Bauteilabschnitt 42 und der zweite Bauteilabschnitt 44 horizontal angeordnet sind. Dies ist auch aus der Stellung des Kurbeltriebs 90 ersichtlich, der den zweiten Bauteilabschnitt 44 in der Nähe der dritten Achse 52 anhebt. Weiter ist die Stelleinrichtung 30 dargestellt, die zum Verschwenken des zweiten Bauteilabschnitts 44 in Bezug zum ersten Bauteilabschnitt 42 um die zweite Achse 50 dient. Sowohl die Stelleinrichtung 30 als auch die Schwenkeinrichtung befinden sich dabei in der "Hoch-Position".

Fig. 11 zeigt die Verstelleinrichtung 22 in einer abgesenkten Stellung, wobei das Stützbauteil 40 unter dem ersten Winkel 11 zur Horizontalen angeordnet ist. Der erste Bauteilabschnitt 42, der zweite Bauteilabschnitt 44, und der dritte Bauteilabschnitt 46 bilden in Fig. 11 eine Ebene. Der Kurbeltrieb 90 der Schwenkeinrichtung 32 ist so angeordnet, dass der zweite Bauteilabschnitt 44 durch den Kurbeltrieb 90 nicht angehoben wird und die Stelleinrichtung 30 ist eingefahren, sodass auch die zweite Achse 50 nicht angehoben ist.

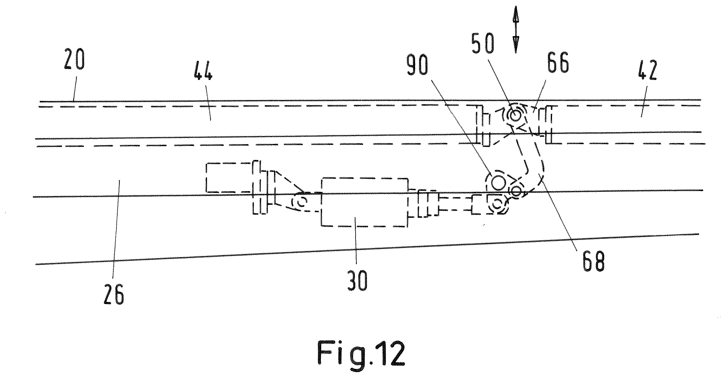

Fig. 12 zeigt eine detailliertere Darstellung des Ausschnitts A aus Fig. 10. Die Stelleinrichtung 30 ist schwenkbar am Rahmengestell 26 gelagert. Die Stelleinrichtung 30 umfasst einen Stellantrieb, der pneumatisch, hydraulisch oder elektrisch betrieben werden kann und mit einem Gelenkhebel 70 verbunden ist. Der Gelenkhebel 70 ist drehbar am Rahmengestell 26 gelagert und über ein Hebelelement 68 mit der zweite Achse 50 verbunden.

Die Stelleinrichtung 30 ist in der ausgefahrenen Stellung dargestellt. Der Gelenkhebel 70 drückt dabei das Hebelelement 68 in Richtung der zweiten Achse 50. Wenn die Stelleinrichtung 30 eingefahren wird, schwenkt der Gelenkhebel 70 aus der Darstellung in Fig. 12 gesehen im Uhrzeigersinn. Dies bewirkt, dass das Hebeelement 68 von der zweiten Achse 50 weggezogen wird wodurch die zweite Achse 50 abgesenkt wird.

Auf diese Weise kann die Höhe bzw. die Position der zweiten Achse 50 mittels der Stelleinrichtung 30 verändert werden. So kann die zweite Achse 50 in Position gehalten werden, während der zweite Bauteilabschnitt 44 um die zweite Achse 50 verschwenkt wird.

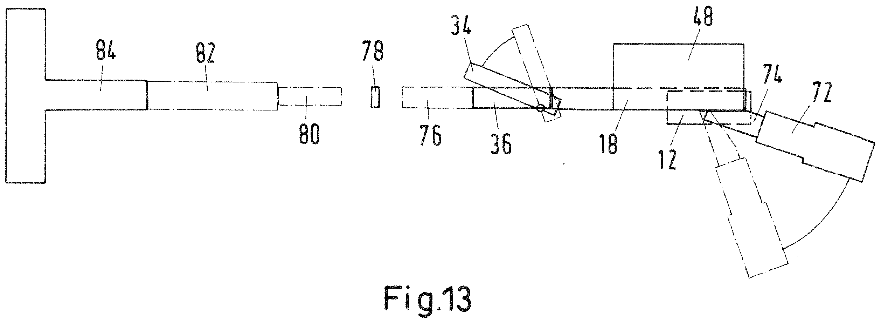

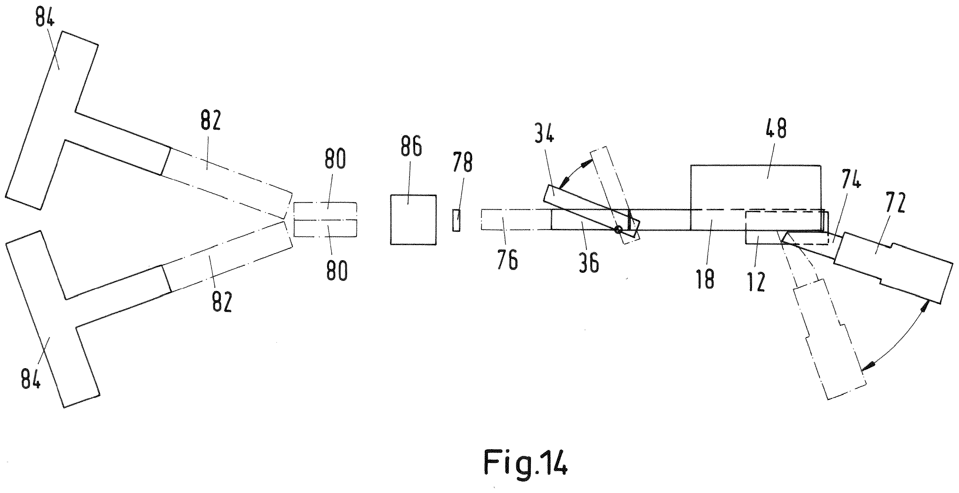

Die Fig. 13 und Fig. 14 zeigen verschiedene Layouts für Gesamtanlagen, die Schneideinrichtungen 10 aufweisen. Gleiche Anlagenkomponenten sind hier mit gleichen Bezugszeichen versehen. Die Ausführungen zu den Funktionen der einzelnen Anlagenkomponenten gelten, wenngleich detailliert nur zu einer Figur gegeben, auch für alle anderen in den Figuren beschriebenen Layout Beispiele.

Fig. 13 zeigt ein beispielhaftes Layout für eine Gürtelanlage ohne Slitter. Vorgesehen ist eine Abwickelstation 72, aus der das zu bearbeitende Bandmaterial 38, z. B. Cordband, bezogen wird. In der Abwickelstation 72 werden in ein geeignetes Gestell die zu verarbeitenden Materialrollen eingehängt und ausgewickelt. Hierbei wird das zu verarbeitende gummierte Bandmaterial von einer Zwischenlage (Folie, Leinen oder Ähnliches) getrennt. Diese Zwischenlage wird verwendet, um das Verkleben der gummierten Materialbahn zu verhindern. Um verschiedene Schneidwinkel zu realisieren, kann der Abwickler 72 geschwenkt werden, was jedoch nicht zwingend erforderlich ist. Es gibt unterschiedliche Ausführungsformen hinsichtlich eines solchen Abwicklers 72. Bekannt sind Einfachabwickler, in die eine Materialrolle eingehängt werden kann. Bei einem Doppelabwickler mit Drehtisch sind zwei Materialrollen zum Einhängen, eine davon wird verarbeitet, eine davon gewechselt. Daneben ist ein Doppelabwickler mit Shuttlerrahmen zum Einhängen von zwei Materialrollen bekannt, eine wird verarbeitet, eine davon gewechselt. Weiterhin sind Kassettenabwickler bekannt, in denen eine Materialrolle in eine Kassette gehängt wird und die Kassette sodann in den Abwickler 72 transportiert wird. Diese Aufzählung ist nicht abschließend. Der Abwickler ist verschwenkbar.

Der Abwickelstation 72 folgt eine erfindungsgemäße Schneidvorrichtung 10, die zum Schneiden des von der Abwickelstation 72 kommenden Bandmaterials 38 dient. Die Schneidvorrichtung dient zum Abschneiden von Bandmaterialabschnitten 24, die in diesem Beispiel Cordbandstreifen sein können, in einer definierten Breite und einem definierten Winkel.

Der Scherentisch dient als Materialunterstützung 74 und ist mit der Abwickelstation 72 verbunden und schwenkt im Bedarfsfall gemeinsam mit dieser. Das zu verarbeitende Material liegt auf dem Scherentisch und wird auf diesem liegend in die Schneideinrichtung 10 gezogen. Am Anfang des Tisches oder darüber befindet sich sehr häufig eine Fördereinrichtung, die den Materialanfang in die Schere transportiert, z. B. eine angetriebene Förderrolle. Dies ist immer dann notwendig, wenn die Maschine komplett entleert ist und der Anfang einer neuen Materialrolle in die Schneidvorrichtung 10 eingelegt werden muss, oder falls zum Schwenken des Abwicklers das Material ein Stück weit aus der Schneidvorrichtung 10 zurückgezogen wurde.

Relevant für die Schneidvorrichtungsbauform ist der Ablauf nach dem Schneiden. Um das geschnittene Material mit wenigen Bearbeitungsschritten in den Folgeprozess einzubinden sind weitere Maschinenkomponenten im Einsatz. Dafür ist es erforderlich so nah wie möglich mit diesen Komponenten an das Untermesser und in das Maschinengestell zu bauen. Das Material sollte hierzu so wenig wie möglich bewegt werden (u.a. Fallhöhe), um es in geschnittener Ablageposition weiter zu verarbeiten.

Um das Material durch die Schneidvorrichtung 10 zu fördern, kommt die Zugvorrichtung zum Einsatz. Die Zugvorrichtung kann als Greifeinrichtung 48 ausgebildet sein und kann als Teil der Schneidvorrichtung 10 zum Fördern der Materialbahn in die Schneidvorrichtung 10 dienen bzw. kann das gegriffene Band durch die beiden Messer 14, 16 ziehen. Die Schneidvorrichtung 10 weist ferner ein Band 18 auf, das den geschnittenen Cordbandstreifen aufnimmt und ihn aus der Schneidvorrichtung 10 transportiert.

Der Cordbandstreifen wird sodann auf das Band 18 gegeben und einer Spleißeinheit 34 zugeführt. Der Spleißer 34 dient zum rein mechanischen Verbinden ohne Zuhilfenahme von Zusatzstoffen der zuvor geschnittenen Bandstreifen. Der Spleißer ist im Winkel verschwenkbar, um das Bandmaterial in verschiedenen Winkeln verarbeiten zu können.

Optional kann der Spleißvorrichtung 34 noch ein Band 76 zum Handspleißen, also zur manuellen Verbindung der Bandmaterialabschnitte 24 nachgeschaltet sein. Während dieser manuellen Bearbeitung ist die automatische Spleißvorrichtung 34 außer Betrieb. Ein solches Handspleißen ist bei bestimmten Cordbandmaterialien, sehr schmalen Abschnittsbreiten oder auf Kundenwunsch erforderlich.

Optional kann auch eine Beruhigungsrolle 78 vorgesehen werden. Hierbei erfährt das Material durch den Transport über die Rolle eine Gegenbiegung. Durch die Gegenbiegung zieht sich das Material in Längsrichtung zusammen. Hintergrund ist somit die Dehnung des Materials in Längsrichtung bei der Verarbeitung in der Spleißvorrichtung 34 zu reduzieren. Diese Rolle ist jedoch nicht zwingend vorzusehen.

Weiterhin ist, ebenso optional, ein Reparaturband 80 vorgesehen. Sollten Fehler im Band erkannt werden, können sie hier repariert werden.

Gemäß Fig. 13 folgt sodann eine ebenfalls optionale Belegevorrichtung 82. In dieser Station werden auf die erzeugte Materialbahn noch weitere Gummistreifen, ein bis zwölf Stück, aufgelegt. Das Auflegen kann von oben und/oder von unten erfolgen. Des Weiteren werden häufig die Außenkanten der Materialbahn eingefasst, d. h. ein Gummistreifen wird von der Außenkante mit Überstand aufgelegt und um die Gummikante herumgelegt, um die an der Außenkante, die der Schnittkante an den Bandmaterialabschnitten entspricht, freiliegenden Cordfäden zu ummanteln.

In jedem Fall vorgesehen ist eine Aufwickelstation 84. In dieser Station werden die Materialbahnen wieder mit einer Zwischenlage, die das Verkleben verhindert, auf Spulen gewickelt. Auch hier gibt es verschiedene Ausführungsformen, die von recht einfachen Einfachaufwicklern, in denen das Material manuell abgeschnitten und an einer neuen Rolle aufgewickelt werden muss, bis hin zu vollautomatischen Aufwicklern, in denen für das Materialhandling keinerlei Bedieneingriffe notwendig sind, reichen.

Fig. 14 zeigt schließlich ein Anlagenlayout für eine Gürtelanlage entsprechend Fig. 13, jedoch ist hier zusätzlich ein Slitter 86 integriert. Die hierüber erfolgte Trennung der gespleißten Materialbahn führt dazu, dass in jedem Fall zwei Aufwickelstationen 84 vorzusehen sind, denen jeweils optional jeweils eine Belegevorrichtung 82 und/oder ein Reparaturband 80 vorgeschaltet sein kann.

Wenngleich in sämtlichen Darstellungen das Band 18 von rechts nach links gefördert wird, ist es selbstverständlich möglich, das Layout auch in umgekehrter, spiegelbildlicher Ausführung auszulegen, also den Bandmaterialabschnitt 24 von links nach rechts zu transportieren. Alle als optional beschriebenen Komponenten können in unterschiedlicher Kombination zusammen mit den weiteren Komponenten vorgesehen werden. Deshalb sind unterschiedliche Layouts aus allen beschriebenen Komponenten erstellbar.

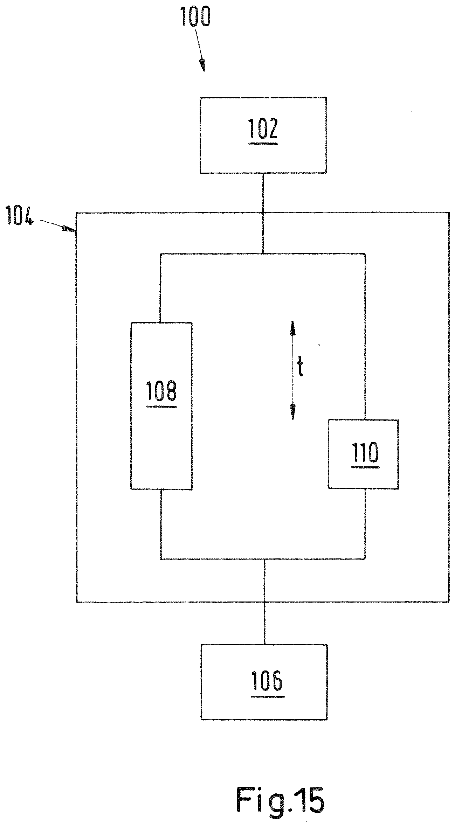

In Fig. 15 wird ein Verfahren 100 zum Betreiben einer Schneideinrichtung 10 mittels eines schematischen Flussdiagramms dargestellt. Die Schneideinrichtung 10 kann dabei gemäß der oben angeführten Beschreibung ausgebildet sein.

In einem ersten Schritt 102 werden der erste Bauteilabschnitt 42 um die erste Achse 28 und der zweite Bauteilabschnitt 44 um die zweite Achse 50 in eine im Wesentlichen horizontale Stellung verschwenkt. Das Verschwenken des ersten Bauteilabschnitts 42 im Schritt 102 wird mittels der Stelleinrichtung 30 durchgeführt. Das Verschwenken des zweiten Bauteilabschnitts 44 kann mittels der Schwenkeinrichtung 32 durchgeführt werden.

Das Bandmaterial 38 wird mittels der Schneideinrichtung durch eine Schneidbewegung 104 des Obermessers 14 relativ zum Untermesser 16 geschnitten. Dabei bewegt sich zumindest während eines Teils der Bewegung des Obermessers 14 ein Schnittpunkt 64 entlang einer Schnittkante 88 des Untermessers 16 durch einen vorderen Schnittbereich 56 und einen hinteren Schnittbereich 58 der Messeranordnung.

Dabei wird während der Bewegung des Obermessers zum Untermesser in einem zweiten Schritt 108 der zweite Bauteilabschnitt um die zweite Achse 50 von der nahezu horizontalen Stellung in einen zunehmenden Winkel zur Horizontalen verschwenkt. Der zweite Bauteilabschnitt 44 wird dadurch gegenüber der Schnittkante 88 abgesenkt und kann somit dem Obermesser ausweichen. Der zweite Schritt 108 beginnt dabei vorzugsweise, kurz bevor das Obermesser 14 in Überdeckung mit dem Untermesser 16 kommt. Spätestens soll das Verschwenken des zweiten Bauteilabschnitts 44 aber beginnen, sobald das Bandmaterial 38 eingeschnitten wird.

In einem weiteren Schritt 110 beginnt während der fortschreitenden Schneidbewegung 104 mit einer zeitlichen Verzögerung t ein Verschwenken des ersten Bauteilabschnitts 42 um die erste Achse 28 von der nahezu horizontalen Stellung in einen zunehmenden Winkel zur Horizontalen. Die Schritte 108 und 110 überlagern sich dabei, das Verschwenken des ersten Bauteilabschnitts 42 erfolgt also bei gleichzeitiger Bewegung des zweiten Bauteilabschnitts 44. Der erste Bauteilabschnitt 42 und der zweite Bauteilabschnitt 44 werden also gemeinsam in eine untere Position bewegt, in der ein Abstand zur Schneidkante 88 maximal ist.

Der Schritt 110 und damit das Verschwenken des ersten Bauteilabschnitts 42 um die erste Achse 28 findet statt, während der Schnittpunkt 64 den hinteren Schnittbereich 58 durchquert. Das Verschwenken des ersten Bauteilabschnitts 42 beginnt vorzugsweise bereits kurz bevor der Schnittpunkt 64 vom vorderen Schnittbereich 56 in den hinteren Schnittbereich 58 übergeht. Der geschnittene Bandmaterialabschnitt wird dann in einem nachgelagerten Schritt 106 von einem Band zum Aufnehmen und Transportieren von Bandmaterialabschnitten aufgenommen. Das Band transportiert den abgeschnittenen Bandmaterialabschnitt zu weiteren Verarbeitungsanlagen, in denen der Bandmaterialabschnitt zum Beispiel mit weiteren Bandmaterialabschnitten zu einem Endlosband verbunden wird.

### Bezugszeichenliste

- 10: Schneideinrichtung
- 11: erster Winkel
- 12: Messeranordnung
- 13: zweiter Winkel
- 14: Obermesser
- 15: dritter Winkel
- 16: Untermesser
- 17: Transportrichtung
- 18: Band
- 19: Abstand
- 20: Obertrum
- 22: Verstelleinrichtung
- 23: Abstand
- 24: Bandmaterialabschnitt
- 25: Abstand
- 26: Rahmengestell
- 27: Ablagebereich
- 28: erste Achse
- 30: Stelleinrichtung
- 32: Schwenkeinrichtung
- 34: Spleißeinrichtung
- 36: Transportband
- 38: Bandmaterial
- 40: Stützbauteil
- 42: erster Bauteilabschnitt
- 44: zweiter Bauteilabschnitt
- 46: dritter Bauteilabschnitt
- 48: Greifeinrichtung
- 50: zweite Achse
- 52: dritte Achse
- 54: vierte Achse
- 56: vorderer Schnittbereich
- 58: hinterer Schnittbereich
- 60: Startpunkt des Schnitts
- 62: Antriebseinrichtung
- 64: Schnittpunkt
- 66: Gelenkverbindung
- 68: Hebelelement
- 70: Gelenkhebel
- 72: Abwickelstation
- 74: Materialunterstützung
- 76: Band zum Handspleißen
- 78: Beruhigungsrolle
- 80: Reparaturband
- 82: Belegevorrichtung
- 84: Aufwickelstation
- 86: Slitter
- 88: Schnittkante
- 90: Kurbeltrieb
- 92: Kurbeltrieb

## Patentansprüche

1. Schneideinrichtung zum Schneiden von Bandmaterial (38), insbesondere eines Stahl-oder Textilcordbands, wobei die Schneideinrichtung (10) eine Messeranordnung (12), die ein bewegbares Obermesser (14), ein diesem zugeordnetes unbewegliches Untermesser (16) und eine Antriebseinrichtung (62) zum Bewegen des Obermesser (14) aufweist, wobei sich während zumindest eines Teils der Bewegung des Obermessers (14) ein Schnittpunkt (64) entlang einer Schnittkante (88) des Untermessers (16) von einem vorderen Schnittbereich (56) zu einem hinteren Schnittbereich (58) der Messeranordnung (12) bewegt; wobei ein Band (18) zur Aufnahme und zum Abtransport eines geschnittenen Bandmaterialabschnitts (24) der Messeranordnung (12) nachgeschaltet ist, wobei das Band (18) ein Obertrum (20) aufweist, das eine unter einem ersten Winkel (11) zur Horizontalen verlaufende Stellung umfasst, wobei eine Verstelleinrichtung (22) im Bereich der Messeranordnung (12) angeordnet ist und ein unterhalb des Bands (18) angeordnetes Stützbauteil (40) aufweist, wobei das Stützbauteil (40) das Band (18) hält, **dadurch gekennzeichnet, dass** das Stützbauteil (40) einen ersten Bauteilabschnitt (42), der dem hinteren Schnittbereich (58) zugeordnet ist, und einen zweiten Bauteilabschnitt (44), der dem vorderen Schnittbereich (56) zugeordnet ist, aufweist, wobei der erste Bauteilabschnitt (42) um eine erste Achse (28) schwenkbar zwischen der unter dem ersten Winkel (11) zur Horizontalen verlaufenden Stellung und einer im Wesentlichen horizontalen Stellung verstellbar ist, wobei der zweite Bauteilabschnitt (44) relativ zum ersten Bauteilabschnitt (42) um eine zweite Achse (50) schwenkbar zwischen der im Wesentlichen horizontalen Stellung und einer unter einem zweiten Winkel (13) zur Horizontalen verlaufenden Stellung verstellbar ist, wobei die zweite Achse (50) zwischen dem ersten Bauteilabschnitt (42) und dem zweiten Bauteilabschnitt (44) angeordnet ist.

2. Schneideinrichtung nach Anspruch 1, **dadurch gekennzeichnet, dass** die Verstelleinrichtung (22) derart betreibbar ist, dass der zweite Bauteilabschnitt (44) um die zweite Achse (50) von der horizontalen Stellung zum zweiten Winkel (13) zur Horizontalen verschwenkt wird, bevor und während der Schnittpunkt (64) den vorderen Schnittbereich (56) und den hinteren Schnittbereich (58) durchquert.

3. Schneideinrichtung nach Anspruch 1 oder 2, **dadurch gekennzeichnet, dass** die Verstelleinrichtung (22) derart betreibbar ist, dass der erste Bauteilabschnitt (42) um die erste Achse (28) von der horizontalen Stellung zum ersten Winkel (11) zur Horizontalen verschwenkt wird, bevor und während der Schnittpunkt (64) den hinteren Schnittbereich (58) durchquert.

4. Schneideinrichtung nach einem der Ansprüche 1 bis 3, **dadurch gekennzeichnet, dass** die zweite Achse (50) durch eine Gelenkverbindung (66) zwischen dem ersten Bauteilabschnitt (42) und dem zweiten Bauteilabschnitt (44) gebildet ist.

5. Schneideinrichtung nach einem der Ansprüche 1 bis 4, **dadurch gekennzeichnet, dass** die Verstelleinrichtung (22) eine Stelleinrichtung (30) zum Verstellen der Position der zweiten Achse (50) aufweist.

6. Schneideinrichtung nach Anspruch 5, **dadurch gekennzeichnet, dass** die Stelleinrichtung (30) derart betreibbar ist, dass die Stelleinrichtung (30) die zweite Achse (50) positionsfest hält, während der Schnittpunkt (64) den vorderen Schnittbereich (56) durchquert, und die zweite Achse (50) senkt, bevor und während der Schnittpunkt (64) den hinteren Schnittbereich (58) durchquert.

7. Schneideinrichtung nach Anspruch 5 oder 6, **dadurch gekennzeichnet, dass** die Stelleinrichtung (30) mit einem Gelenkhebel (70) verbunden ist und schwenkbar am Rahmengestell (26) gelagert ist, wobei der Gelenkhebel (70) mittels eines Hebelelements (68) mit der zweiten Achse (50) verbunden ist.

8. Schneideinrichtung nach einem der Ansprüche 1 bis 7, **dadurch gekennzeichnet, dass** der vordere Schnittbereich (56) und der hintere Schnittbereich (58) annähernd gleich lang ausgebildet sind.

9. Schneideinrichtung nach einem der Ansprüche 1 bis 8, **dadurch gekennzeichnet, dass** die Verstelleinrichtung (22) eine Schwenkeinrichtung (32) zum Schwenken des zweiten Bauteilabschnitts (44) um die zweite Achse (50) aufweist.

10. Schneideinrichtung nach einem der Ansprüche 1 bis 9, **dadurch gekennzeichnet, dass** das Stützbauteil (40) einen dritten Bauteilabschnitt (46) aufweist, der außerhalb des Bereichs der Messeranordnung (12) unterhalb des Bands angeordnet ist, wobei der zweite Bauteilabschnitt (44) relativ zum dritten Bauteilabschnitt (46) um eine dritte Achse (52) schwenkbar gelagert ist, wobei die dritte Achse (52) zwischen dem zweiten und dem dritten Bauteilabschnitt (44, 46) angeordnet ist, wobei der dritte Bauteilabschnitt (46) um eine vierte Achse (54) zwischen der unter einem ersten Winkel (11) zur Horizontalen verlaufenden Stellung und einem dritten Winkel (15) zur Horizontalen verlaufenden Stellung schwenkbar gelagert ist.

11. Verfahren zum Betreiben einer Schneideinrichtung (10) nach einem der vorhergehenden Ansprüche, wobei das Verfahren (100) die folgenden Schritte umfasst:
- Verschwenken (102) des ersten Bauteilabschnitts (42) um die erste Achse (28) in die im Wesentlichen horizontale Stellung und Verschwenken des zweiten Bauteilabschnitts (44) um die zweite Achse (50) in die im Wesentlichen horizontale Stellung,
- Schneiden (104) von Bandmaterial mittels der Schneideinrichtung durch Bewegen des Obermessers zum Untermesser, wobei sich während zumindest eines Teils der Bewegung des Obermessers ein Schnittpunkt (64) entlang einer Schnittkante des Untermessers von einem vorderen Schnittbereich (56) zu einem hinteren Schnittbereich (58) der Messeranordnung (12) bewegt, und
- Aufnehmen (106) eines geschnittenen Bandmaterialabschnitts mittels des Bandes.

12. Verfahren nach Anspruch 11, **gekennzeichnet durch:**
- Verschwenken (108) des zweiten Bauteilabschnitts (44) um die zweite Achse (50) von der horizontalen Stellung zum zweiten Winkel (13) zur Horizontalen, insbesondere während der Schnittpunkt (64) den vorderen Schnittbereich (56) und den hinteren Schnittbereich (58) durchquert.

13. Verfahren nach Anspruch 11 oder 12, **gekennzeichnet durch:**
- Verschwenken (110) des ersten Bauteilabschnitts (42) um die erste Achse (28) von der horizontalen Stellung zum ersten Winkel (11) zur Horizontalen, während der Schnittpunkt (64) den hinteren Schnittbereich (58) durchquert.

## Claims

1. Cutting device for cutting strip material (38), in particular a steel cord strip or textile cord strip, wherein the cutting device (10) a blade arrangement (12), which has a movable upper blade (14), an immovable lower blade (16) assigned to this, and a drive device (62) for moving the upper blade (14), wherein during at least some of the movement of the upper blade (14) a cutting point (64) moves along a cutting edge (88) of the lower blade (16) from a front cutting region (56) to a rear cutting region (58) of the blade arrangement (12); wherein a belt (18) is situated downstream of the blade arrangement (12) for the pick-up and for the transporting away of a cutting strip material section (24), wherein the belt (18) has an upper strand (20) which comprises a position extending at a first angle (11) to the horizontal, wherein an adjusting device (22) is arranged in the region of the blade arrangement (12) and has a supporting component (40) arranged beneath the belt (18), wherein the supporting component (40) holds the belt (18), **characterised in that** the supporting component (40) has a first component section (42) which is assigned to the rear cutting region (58), and a second component section (44) which is assigned to the front cutting region (56), wherein the first component section (42) can be adjusted pivotably about a first axis (28) between the position extending at the first angle (11) to the horizontal and a substantially horizontal position, wherein the second component section (44) can be adjusted pivotably relatively to the first component section (42) about a second axis (50) between the substantially horizontal position and a position extending at a second angle (13) to the horizontal, wherein the second axis (50) is arranged between the first component section (42) and the second component section (44).

2. Cutting device according to claim 1, **characterised in that** the adjusting device (22) can be operated such that the second component section (44) is pivoted about the second axis (50) from the horizontal position to the second angle (13) to the horizontal, before and while the cutting point (64) traverses the front cutting region (56) and the rear cutting region (58).

3. Cutting device according to claim 1 or 2, **characterised in that** the adjusting device (22) can be operated such that the first component section (42) is pivoted about the first axis (28) from the horizontal position to the first angle (11) to the horizontal, before and while the cutting point (64) traverses the rear cutting region (58).

4. Cutting device according to any of claims 1 to 3, **characterised in that** the second axis (50) is formed by a joint connection (66) between the first component section (42) and the second component section (44).

5. Cutting device according to any of claims 1 to 4, **characterised in that** the adjusting device (22) has a positioning device (30) for adjusting the position of the second axis (50).

6. Cutting device according to claim 5, **characterised in that** the positioning device (30) can be operated such that the positioning device (30) holds the second axis (50) in a fixed position, while the cutting point (64) traverses the front cutting region (56), and lowers the second axis (50), before and while the cutting point (64) traverses the rear cutting region (58).

7. Cutting device according to claim 5 or 6, **characterised in that** the positioning device (30) is connected with an articulated lever (70) and is mounted pivotably on the frame (26), wherein the articulated lever (70) is connected with the second axis (50) by means of a lever element (68).

8. Cutting device according to any of claims 1 to 7, **characterised in that** the front cutting region (56) and the rear cutting region (58) are configured so as to be virtually the same length.

9. Cutting device according to any of claims 1 to 8, **characterised in that** the adjusting device (22) has a pivoting device (32) for pivoting the second component section (44) about the second axis (50).

10. Cutting device according to any of claims 1 to 9, **characterised in that** the supporting component (40) has a third component section (46) which is arranged outside the region of the blade arrangement (12) beneath the belt, wherein the second component section (44) is mounted pivotably about a third axis (52) relative to the third component section (46), wherein the third axis (52) is arranged between the second and the third component sections (44, 46), wherein the third component section (46) is mounted pivotably about a fourth axis (54) between the position extending at a first angle (11) to the horizontal and a third angle (15) to the horizontal extending position.

11. Method for operating a cutting device (10) according to any of the preceding claims, wherein the method (100) comprises the following steps:
- pivoting (102) the first component section (42) about the first axis (28) into the substantially horizontal position and pivoting the second component section (44) about the second axis (50) into the substantially horizontal position,
- cutting (104) strip material by means of the cutting device by moving the upper blade to the lower blade, wherein during at least a part of the movement of the upper blade a cutting point (64) moves along a cutting edge of the lower blade from a front cutting region (56) to a rear cutting region (58) of the blade arrangement (12), and
- picking up (106) a cut strip material section by means of the belt.

12. Method according to claim 11, **characterised by:**
- pivoting (108) the second component section (44) about the second axis (50) from the horizontal position to the second angle (13) of the horizontal, particularly while the cutting point (64) traverses the front cutting region (56) and the rear cutting region (58).

13. Method according to claim 11 or 12, **characterised by:**
- pivoting (110) the first component section (42) about the first axis (28) from the horizontal position to the first angle (11) of the horizontal, while the cutting point (64) traverses the rear cutting region (58).

## Revendications

1. Dispositif de coupe pour couper un matériau en bande (38), en particulier une bande de câble d'acier ou de textile, dans lequel le dispositif de coupe (10) un dispositif à couteaux (12) qui présente un couteau supérieur mobile (14), un couteau inférieur non mobile (16) affecté à celui-ci et un dispositif d'entraînement (62) pour déplacer le couteau supérieur (14), dans lequel, pendant au moins une partie du déplacement du couteau supérieur (14), un point de coupe (64) se déplace le long d'un bord de coupe (88) du couteau inférieur (16) à partir d'une zone de coupe avant (56) vers une zone de coupe arrière (58) du dispositif à couteaux (12) ; dans lequel une bande (18) pour recevoir et évacuer une section de matériau en bande coupée (24) est disposée en aval du dispositif à couteaux (12), dans lequel la bande (18) présente un brin supérieur (20) qui comprend une position s'étendant à l'horizontale sous un premier angle (11), dans lequel un dispositif de réglage (22) est disposé dans la zone du dispositif à couteaux (12) et présente une pièce d'appui (40) disposée sous la bande (18), dans lequel la pièce d'appui (40) tient la bande (18), **caractérisé en ce que** la pièce d'appui (40) présente une première section de pièce (42) affectée à la zone de coupe arrière (58) et une deuxième section de pièce (44) affectée à la zone de coupe avant (56), dans lequel la première section de pièce (42) peut pivoter autour d'un premier axe (28) entre la position s'étendant à l'horizontale sous un premier angle (11) et une position sensiblement horizontale, dans lequel la deuxième section de pièce (44) peut pivoter par rapport à la première section de pièce (42) autour d'un deuxième axe (50) entre la position sensiblement horizontale et une position s'étendant à l'horizontale sous un deuxième angle (13), dans lequel le deuxième axe (50) est disposé entre la première section de pièce (42) et la deuxième section de pièce (44).

2. Dispositif de coupe selon la revendication 1, **caractérisé en ce que** le dispositif de réglage (22) peut être actionné de sorte que la deuxième section de pièce (44) pivote autour du deuxième axe (50) de la position horizontale vers le deuxième angle (13) à l'horizontale, avant et pendant que le point de coupe (64) traverse la zone de coupe avant (56) et la zone de coupe arrière (58).

3. Dispositif de coupe selon la revendication 1 ou 2, **caractérisé en ce que** le dispositif de réglage (22) peut être actionné de sorte que la première section de pièce (42) pivote autour du premier axe (28) de la position horizontale vers le premier angle (11) à l'horizontale, avant et pendant que le point de coupe (64) traverse la zone de coupe arrière (58).

4. Dispositif de coupe selon l'une quelconque des revendications 1 à 3, **caractérisé en ce que** le deuxième axe (50) est formé par une connexion articulée (66) entre la première section de pièce (42) et la deuxième section de pièce (44).

5. Dispositif de coupe selon l'une quelconque des revendications 1 à 4, **caractérisé en ce que** le dispositif de réglage (22) présente un dispositif de réglage (30) pour régler la position du deuxième axe (50).

6. Dispositif de coupe selon la revendication 5, **caractérisé en ce que** le dispositif de réglage (30) peut être actionné de sorte que le dispositif de réglage (30) tient le deuxième axe (50) en position fixe pendant que le point de coupe (64) traverse la zone de coupe avant (56) et abaisse le deuxième axe (50) avant et pendant que le point de coupe (64) traverse la zone de coupe arrière (58).

7. Dispositif de coupe selon la revendication 5 ou 6, **caractérisé en ce que** le dispositif de réglage (30) est connecté à un levier articulé (70) et est monté de manière pivotante sur le châssis d'encadrement (26), dans lequel le levier articulé (70) est connecté au deuxième axe (50) au moyen d'un élément de levier (68).

8. Dispositif de coupe selon l'une quelconque des revendications 1 à 7, **caractérisé en ce que** la zone de coupe avant (56) et la zone de coupe arrière (58) sont de longueur approximativement égale.

9. Dispositif de coupe selon l'une quelconque des revendications 1 à 8, **caractérisé en ce que** le dispositif de réglage (22) présente un dispositif de pivotement (32) pour faire pivoter la deuxième section de pièce (44) autour du deuxième axe (50).

10. Dispositif de coupe selon l'une quelconque des revendications 1 à 9, **caractérisé en ce que** la pièce d'appui (40) présente une troisième section de pièce (46) qui est disposée à l'extérieur de la zone du dispositif à couteaux (12) en dessous de la bande, dans lequel la deuxième section de pièce (44) est montée de manière pivotante par rapport à la troisième section de pièce (46) autour d'un troisième axe (52), dans lequel le troisième axe (52) est disposé entre les deuxième et troisième sections de pièce (44, 46), dans lequel la troisième section de pièce (46) est montée de manière pivotante autour d'un quatrième axe (54) entre la position s'étendant à l'horizontale sous un premier angle (11) et un troisième angle (15) à la position s'étendant à l'horizontale.

11. Procédé de fonctionnement d'un dispositif de coupe (10) selon l'une quelconque des revendications précédentes, dans lequel le procédé (100) comprend les étapes suivantes :
- le pivotement (102) de la première section de pièce (42) autour du premier axe (28) dans la position sensiblement horizontale et le pivotement de la deuxième section de pièce (44) autour du deuxième axe (50) dans la position sensiblement horizontale,
- la coupe (104) d'un matériau en bande au moyen du dispositif de coupe en déplaçant le couteau supérieur vers le couteau inférieur, dans lequel, pendant au moins une partie du mouvement du couteau supérieur, un point de coupe (64) se déplace le long d'un bord de coupe du couteau inférieur à partir d'une zone de coupe avant (56) vers une zone de coupe arrière (58) du dispositif à couteaux (12), et
- la réception (106) d'une section de matériau en bande coupée au moyen de la bande.

12. Procédé selon la revendication 11, **caractérisé par** :
- le pivotement (108) de la deuxième section de pièce (44) autour du deuxième axe (50) de la position horizontale vers le deuxième angle (13) à l'horizontale, en particulier pendant que le point de coupe (64) traverse la zone de coupe avant (56) et la zone de coupe arrière (58).

13. Procédé selon la revendication 11 ou 12, **caractérisé par** :
- le pivotement (110) de la première section de pièce (42) autour du premier axe (28) de la position horizontale vers le premier angle (11) à l'horizontale, pendant que le point de coupe (64) traverse la zone de coupe arrière (58).
